# EUROPEAN PATENT SPECIFICATION

(11) **EP 2 141 051 B1**
(45) Date of publication and mention of the grant of the patent: **29.08.2012**
(21) Application number: 08159754.4
(22) Date of filing: 04.07.2008
(51) Int. Cl.: B60R 21/015, B60R 21/2342

(54) **Air bag arrangement**
Airbag-Anordnung
Agencement d'un coussin gonflable

(43) Date of publication of application: 06.01.2010
(73) Proprietor: Volvo Car Corporation, 405 31 Göteborg (SE)
(72) Inventor: Heurlin, Fredrik, 423 56 Torslanda (SE); Hardå, Peter Dr., 413 24 Göteborg (SE)
(74) Representative: Valea AB

(56) References cited:
- EP-A- 1 356 998
- DE-A1- 19 816 080
- DE-A1-102006 028 510
- US-A- 5 762 367

## Description

### TECHNICAL FIELD

The present invention relates to an air bag deployment arrangement, the air bag comprises at least a first and a second deployment volume which is deployed dependent on the occupant position.

### BACKGROUND OF THE INVENTION

Air bag arrangements are widely used in the vehicle industry and have provided passengers with enhanced safety for the last decades. In an automotive vehicle it is common to position air bags in the hub of the steering wheel, in a recess in the instrument panel, in the seats, in the door panels or in the A, B and C beams. Other positions are of course also possible. Independently of the location of the air bag, the air bag is required to inflate very fast and at the correct moment.

Air bags are usually in fluid communication with a gas emitting inflator, which in turn is generally in communication with an impact sensor. During e.g. a frontal collision between two vehicles, the sensor, e.g. an accelerometer, detects a very rapid deceleration during the vehicles impact. The collision generates an impact pulse which runs through the vehicle; as a consequence, occupants are thrown in the forward direction. Upon detection of the impact, the impact sensor triggers the gas emitting inflator to inflate the air bag, which receives the occupant. It has been found that the inflation of the air bag may be varied depending upon the severity of the collision; such an arrangement is disclosed in US 6,454,300 B1. The arrangement comprises a release mechanism to hold restraining air bag tethers, which can be selectively released at a predetermined condition to provide an air bag of varying size depending on the severity of the collision.

DE 102006028510 A1 disclose a vehicle occupant protection apparatus comprising a an inflatable air bag, and a support member having a vent opening through which inflation fluid may flow. The air bag can be inflated to different volumes using different gas pressures and a tether to regulate the volume of the air bag as a response to a signal of a sensor actuated via a detected crash. The tether is further adapted to move the vent member to thereby regulate the air flowing out form the air bag after deployment.

As mentioned above, an occupant is thrown forward during a frontal collision due to the impact pulse imparted by the impact. To minimize or prevent injuries to the passengers during a collision it is vital that the retardation of the passenger is kept as low as possible. The document mentioned above provides for an arrangement by means of varying the arrangement utilizes releasable tethers which can be released at a predetermined condition. Both the documents above utilize impact sensors which detect the ongoing impact. Additionally in US 2007/0246924 A1, the arrangement can be complemented with seat position sensors, an occupant position sensor, a seatbelt usage sensor or a seat weight sensor. All sensors are used to provide an inflation of the air bag to minimize the sudden retardation of the passenger during collision. However, even with these systems personal injuries are not uncommon in the event of a collision.

The increased awareness of the importance of detecting the position of the occupant before deploying the air bag has resulted in some recent developments within the technological field. For instance, the publication of WO 2005/073034 A1 discloses a safety arrangement which calculates the position of the occupant by measuring the length of the retracted safety belt as compared with a predetermined reference value and inflates to air bag fully or partially dependent on the result of the estimated occupant's position.

There are however still room for additional improvements to the above mentioned arrangements and systems.

### SUMMARY OF THE INVENTION

It is an object of the present invention to provide an improved air bag arrangement and a method for deploying the air bag using the improved air bag arrangement. It is an object of the present invention to at least partly solve some of the draw backs with the existing air bag arrangements. More specifically, the present invention relates to an air bag deployment arrangement for a vehicle. The air bag deployment arrangement comprises at least one air bag, the at least one air bag is deployable to at least a first deployment volume and a second deployment volume. The first deployment volume is larger than the second deployment volume. The arrangement further comprises an inflator device to inflate the at least one air bag. Additionally at least one occupant positioning sensor arrangement is arranged in working cooperation with the inflator device. At least one impact sensor is arranged in working cooperation with the at least one air bag to deploy the at least one air bag to the first or the second deployment volume. The at least one air bag further comprises means for providing a predetermined gas pressure to said at least one air bag as a function of said at least one impact sensor and/or said occupant positioning sensor arrangement for said at least first and second deployment volumes. The present invention provides for a very flexible air bag arrangement which considers not only the position of the occupant but also the severity of a collision and deploys at least one air bag not only to an appropriate size, i.e. for both a first and a second deployment volume, but also with an appropriate gas pressure, i.e. to a first or a second inflation pressure. The present invention fulfils a long felt need of providing an air bag arrangement which can incorporate several different parameters and actually effectuate them into a variable and flexible air bag deployment.

In an embodiment of the present invention, the occupant positioning sensor arrangement comprises a safety belt sensor, a seat positioning sensor and a buckle sensor. The safety belt sensor measures the length which has been withdrawn from the safety belt retractor. This is indicative of the position of the chest of an occupant when compared with a predetermined reference point. Optionally, the reference point can be derived from a plurality of measurements over a longer period of time. The measurements are preferably unique for each occupant. This can be achieved by coding e.g. the start key of the vehicle with e.g. the driver's signature, by weight sensors in the seats, through calibration by the occupant or combinations of the above.

The means for providing a predetermined gas pressure inside the at least one air bag as a function of the at least one impact sensor can comprise any of the following devices; an inflator device operable between at least a first and a second inflation pressure, an active ventilation device arranged on said air bag or an active ventilation device arranged on said air bag housing. As such, the gas pressure inside the airbag can be controlled as well as the volume of the air bag; this will tailor the deployed air bag to the person subjected to the impact as well as the severity of the impact itself.

In an embodiment according to the present invention, the inflator device is operable to inflate the at least one air bag to at least a first inflation pressure and a second inflation pressure or optionally it comprises at least one inflator operable to the at least first and second inflation pressure. This is a cheap embodiment but which still provides for most of the advantages of the present invention. Optionally the inflator device can comprise at least a first and a second inflator. In this embodiment according to the present invention, the first and the second inflator can be single pressure inflators at which the first inflator is operable to the first inflation pressure, and the second inflator is operable to the second inflation pressure. However, it is also within the boundaries of the present invention that the first and the second inflators are two step inflators, e.g. are operable to inflate an air bag to a first or a second inflation pressure. Optionally, the first and second inflators are multi pressure inflators, which each can inflate an air bag to two or more inflation pressures, preferably 5 or more, more preferably 10 or more inflation pressures. In an embodiment of the present invention, the inflator(s) comprises a substantially infinite number of inflation pressures, i.e. a step-less inflation governed by the outcome of the communicating sensor arrangements and the detected impact scenarios. It is however necessary that the inflator(s) are operable between these inflation pressures independently of whether the air bag is deployed to a first or a second deployment volume.

Advantageously is at least one processing unit arranged in working cooperation with the at least one inflator device, the at least one impact sensor, at least one air bag and the at least one occupant positioning sensor arrangement. The processing unit, e.g. a computer, can perform algorithms which may form the basis for determining the different inflation pressures and appropriate deployment volumes. Hence, the processing unit can be arranged to determine a preferred inflation pressure and a preferred deployment volume dependent upon a detected impact scenario and the occupant's position. Although the arrangement can be arranged to function without such a processing unit direct and sequential on/off coupling, e.g. three "on" from three sensors could trigger a specific combination of inflation pressure and deployment volume.

The present invention also relates to a method for deploying an air bag for a vehicle preferably by using any of the air bag arrangements described above. The method comprises the steps of;
- detecting an impact and determine the severity of the impact;
- determining appropriate inflation pressure for the air bag as a function of the detected impact scenario;
- evaluating the position of the occupant;
- determining whether the air bag is to be deployed to a first deployment volume or a second deployment volume dependent upon the outcome of the evaluation of the position of the occupant and;
- deploying the air bag to the determined first or second deployment volume, and to the determined first or second inflation pressure.

The present method provides for a flexible method which uses all gathered information and provides for a safe deployment.

In an embodiment according to the present invention, the inflation pressure inside the air bag is governed by means of an inflator device, and in that the inflator device inflates the air bag to the appropriate gas pressure. The appropriate inflation pressure for the air bag can be evaluated again after an impact, to further adjust the inflation pressure. This is very advantageous since crashes and impacts are unpredictable, and airbags may be deployed due to faulty predictions, this may be corrected at a later stage due to the present invention. For instance, the inflation pressure can be adjusted by means of inflating an additional amount of gas into the air bag or to adjust the volume of the air bag after the first determination and inflation/deployment has been made.

### BRIEF DESCRIPTION OF THE DRAWINGS

The present invention will be described in greater detail with reference to the accompanying figures, wherein;

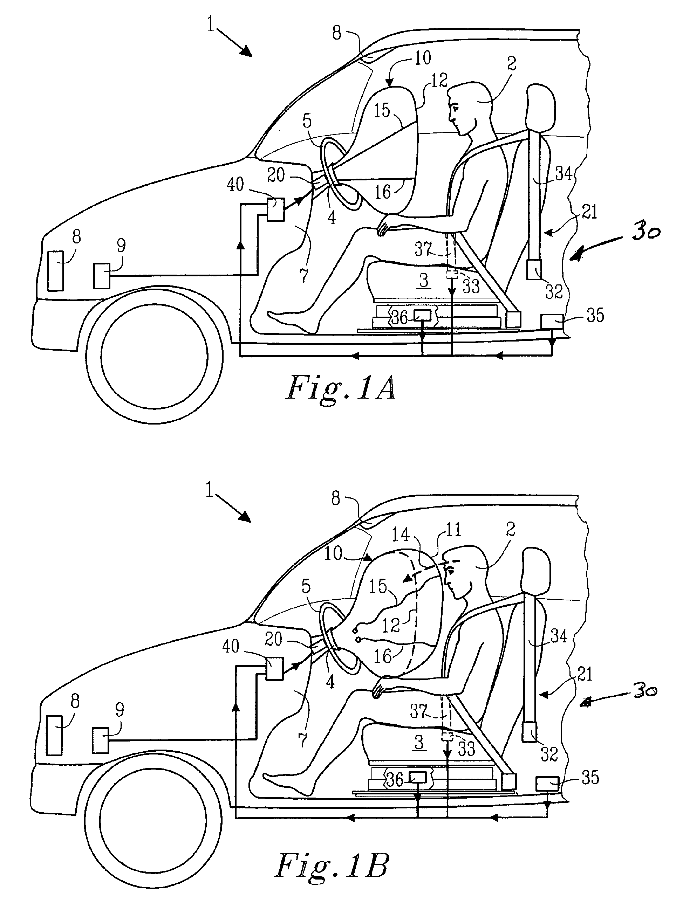

figure 1a shows a schematic cross section of a vehicle with a view from the side, an air bag deployment arrangement according to the present invention is shown deployed into a second deployment volume and;
figure 1b shows a schematic cross section of a vehicle with a view from the side, an air bag deployment arrangement according to the present invention is shown deployed into a first deployment volume;

### DETAILED DESCRIPTION OF PREFERRED EMBODIMENTS

Figure 1a-1b shows a passenger 2, in this case a driver of the vehicle 1, positioned in a driver seat 3. The air bag 10 is deployed from an air bag housing, in this embodiment of the present invention, a hub 4 of the steering wheel 5, positioned on an instrument panel 7 of the vehicle 1. Air bag deployment sensors 8, 9 are arranged in working cooperation with the air bag 10. In the shown embodiment of the present invention, a processing unit 40 is arranged to actuate the deployment of the air bag 10 and as such, the air bag deployment sensors 8, 9 are communicating with the processing unit 40, which in turn is communicating with an air bag inflator device 20. As is showed, only one air bag 10 is deployed, however, it is well within the boundaries of the present invention that more than one air bag is deployed, simultaneously or sequentially, e.g. 2, 3, 4, 5 or more air bags can be deployed.

The air bag 10 comprises a first and a second deployment volume 11, 12. The first deployment volume 11, shown in figure 1b, is larger than the second deployment volume 12 shown in figure 1a. The second deployment volume 12 is also indicated with dotted lines in figure 1b. Before deployment (not shown) the air bag 10 can be said to have a pre-deployment volume, in practice, this volume is very small since the air bag is snugly fitted in the hub 4 of the steering wheel 5. The deployment of the first and the second deployment volumes 11, 12 are, in the shown embodiment of the present invention, controlled by means of a releasable restraining device in the form of two releasable tethers 15, 16. As seen in figure 1b, the releasable tethers 15, 16 have been released from their attachment position to the hub 4 of the steering wheel 4, on the contrary, as seen in figure 1a, in which the releasable tethers 15, 16 are still connected to the hub 4 of the steering wheel 5. After the releasable tethers 15, 16 have been released, the air bag 10 can be inflated, i.e. deployed, to its full size.

The first deployment volume 11 is adapted for deployment when the driver is positioned relatively far away from the hub 4. As the driver is positioned far away, the air bag 10 needs to be inflated to a larger volume as compared when a driver is positioned closer to the hub 4. During an impact or collision which causes the vehicle to a fast retardation, this will provide for a safer retardation of the driver 2, since the driver 2 will be subjected to a longer retardation distance 14. Should the driver be positioned closer to the hub 4, the air bag 10 would be deployed to the second deployment volume 12, as shown in figure 1 a. Although in figure 1 a and 1 b, the driver 2 is positioned on the same spot, with respect to the hub 4, just to illustrate the difference in air bag deployment volumes.

Optionally the air bag can be deployed pre-impact or post-impact. As the air bag 10 is deployed pre-impact, the air bag volume, in this case the first deployment volume 11 can be significantly larger than the volume of an air bag which is deployed after impact, i.e. post-impact. In the shown embodiment of the present invention, this is equivalent with the second deployment volume 12 of the air bag 10, as illustrated in figure 1 a. Since the first deployment volume 11 is larger than the second deployment volume 12; the passenger 2 has a significantly longer retardation distance, indicated by the dotted line with the reference number 14 in figure 1b, during the impact.

The vehicle 1 is equipped with at least one safety belt system 21 comprising a safety belt retractor 32, a buckle 33, and a safety belt 34 arranged in a traditional 3-point configuration. As is seen in figure 1 a and 1 b, the driver 2 is provided with the safety belt 33 in an ordinary fashion.

When an impact is detected by means of the impact sensors 8, 9 the impact sensors 8, 9, directly or indirectly, triggers the inflation of the air bag 10 and dependent on the sensed occupant position, releases the tethers 15,16 at the moment of inflation, so that the air bag 10 can be deployed to the first deployment volume 11, or optionally does not release the tethers 15,16, which will result in that the air bag 10 is deployed to the second deployment volume 12. The impact sensor 8, 9 are arranged to detect not only the impact itself but also the severity of the impact. Suitable impact sensors are radar sensors, laser sensors, vision sensors or the like. Conventional impact sensors may be used which do not need to be described further herein.

The occupant position is evaluated by means of the occupant positioning sensor arrangement 30 of the vehicle 1 which comprises several occupant positioning sensors Each mentioned occupant positioning sensor individually measure parameters indicative for the occupant position. A preferred occupant positioning sensor arrangement 30 is illustrated in figure 1 a and 1 b. The occupant positioning sensor arrangement 30 comprises a safety belt sensor 35 which measures a parameter corresponding to the length of belt withdrawn from the safety belt retractor 32 relative to a predetermined reference value, a seat position sensor 36, which measure a parameter corresponding to the position of the seat 3 relative to a reference point, such as the hub 4, and a buckle sensor 37, which indicates if the buckle is buckled in position. Each of the safety belt sensor 35, the seat position sensor 36 and the buckle sensor 37 is connected to a processing unit 40, which in turn is connected to the inflator device 20. By measuring how far the safety belt 33 has been withdrawn and comparing that measured value with a determined reference value, a probable position of the driver's 2 chest can be estimated. This estimation can be further improved by taking into account the seats 3 current position. This sensor system is outlined in greater detail in the publication of US 2007/0246924 A1 and need no further description here.

The processing unit 40 can, for instance, be a computer. As such it can be programmed to recognize different inputs from each sensor 8, 9, 35, 36, 37. By means of programming the processing unit 40, different scenarios can be preprogrammed and the processing unit 40 can be arranged to detect such a programmed scenario by running a suitable algorithm. As an example, a frontal collision with a vehicle can be programmed and the sensors can thereby identify a real scenario with a pre-programmed scenario, to thereby detect and predict such an event with a higher accuracy than would otherwise be possible simply by determining an imminent impact by means of only the signals from the sensors. Optionally or additionally, the processing unit 40 can be arranged to receive and respond to the inputted signals from the sensors 8, 9, 35, 36, 37. As is shown with respect to impact sensor 8, all communication between each of the sensors and the processing unit 40 can be made by means of wires or wire-less means, such as blue tooth or WLAN.

The inflator device 20 is preferably a two pressure inflator. As such it can be inflated to a first and a second pressure corresponding to a first and a second gas pressure inside of the air bag 10. Optionally the inflator device 20 can be an inflator with two separate inflators, which each is activated separately, a first inflator is activated to the first pressure, or a second inflator is activated to the second pressure. Optionally, the first and the second inflators are simultaneously activated, providing a third pressure for the inflator 20. This kind of inflator device 20 which is operable between at least a first and a second pressure, independently of which deployment volume the air bag has been deployed to, together with an air bag 10, which is operable between at least a first and a second deployment volume 11, 12, has significant advantages as will be outlined with reference to table 1 below.

Optionally the inflation device 20 can comprise optional or additional means to control the gas pressure inside the air bag 10. The inflation can be governed by active ventilation of the air bag 10. This is done by providing additional ventilation to the air bag 10. The effect is that the gas pressure inside the air bag 10 can be modified to fit the detected crash or impact scenario. The ventilation of the air bag 10 is controlled, or activated, from a signal of the impact sensors 8, 9 or optionally from the processing unit 40. Likewise, the appropriate inflation pressure can be governed by active ventilation arranged to the air bag housing, in this case the hub 4.

| | First inflation pressure (low gas pressure generally below 30 kPa) | Second inflation pressure (high gas pressure generally above 30 kPa) |
|---|---|---|
| First deployment volume (large volume) | Driver positioned far away from hub 4 and is subjected to a low impact pulse | Driver positioned far away from hub 4 and is subjected to a high impact pulse |
| Second deployment volume (small volume) | Driver positioned close to hub 4 and is subjected to a low impact pulse | Driver positioned close to hub 4 and is subjected to a high impact pulse |

Table 1 illustrates different crash scenarios and the appropriate inflation pressures and deployment volumes of the air bag(s) at different scenarios. As is understood, if the vehicle 1 collides with e.g. another vehicle, in a frontal collision, the driver 2 is subjected to an impact pulse. The impact pulse will inevitable force the driver 2 in a direction substantially corresponding to the retardation distance 14, as shown in figure 1b, towards the air bag 10 and the hub 4. The hub 4 is used as reference point in this case, although any suitable reference point can be chosen. Dependent on the measured driver's position and the crash/impact scenario, the inflation of the air bag 10 will be different to provide maximum safety for the driver 2, or any other occupant in the vehicle 1. As is noted, the four cases as illustrated in table 1 illustrates four different air bag pressures. When combined with means for active ventilation of the air bag, each case above can be provided with additional pressure adjustment means which, in the example above, will provide for at least eight different air bag gas pressure options. Each option can be specifically chosen dependent upon the detected scenario and the detected occupant position, i.e. as a function of the impact sensors and/or the occupant positioning sensor arrangement.

If the driver 2 is small, e.g. with a length of about 1.60 meters, such a driver needs to position the vehicle seat 3 close to the hub 4 in order to reach the vehicles pedals (not shown) and to sit and drive comfortably. The position of a small driver close to the hub 4 requires that the air bag 10 is deployed to the second deployment volume 12, which is a relatively small volume as compared with the first deployment volume 11. However, if the driver 2 is subjected to a high impact pulse it may still be a need for inflating the air bag 10 with a high pressure and thus provide a safer retardation for the driver 2.

If the driver 2 is a very long person, e.g. with a length of about 2 meters, the driver needs the extra space for his/her legs and will position the seat far away from the hub 4. This would require the air bag to be deployed to the first deployment volume 11 to provide a safe retardation for the driver 2. Again, dependent on the impact scenario detected by the impact sensors 8, 9, e.g. if the impact pulse is low, the air bag 10 may only be needed to be inflated with a low gas pressure, i.e. to the first pressure, to provide for the safest retardation to the driver 2.

As is understood from the above, a numerous of different inflation pressures can be defined for appropriate situation, e.g. for short, medium and long persons and persons in between these heights. As the person's position with respect to the air bag 10 or the hub 4 (as is used as a reference point above) can be determined in a continuously variable manner, the number of zones which can be defined can be substantially infinite. For instance, if the amount of appropriate number of inflation pressures is decided to be three, the first inflation pressure could be in the region of 10-19 kPa, the second inflation pressure in the region of 20-30 kPa and the third inflation pressure in the region of 31- 40 kPa. However, for the sake of illustrating the present invention, the amount of gas pressures has been limited to only two, as is illustrated above.

The air bag arrangement can have several different configurations to meet the requirement of having a first and a second deployment volume 11, 12. For instance, the air bag 10 can be arranged with releasable tethers 15, 16 as shown in figure 1a-1b. The specific release mechanism of the releasable tethers can be pyrotechnical or optionally as described in US 2007/0246924 A1. As an alternative it is possible that the air bag arrangement comprises a first air bag which is deployable into the first deployment volume 11, and a second air bag which is deployable into the second deployment volume 12. It should be noted that there is a difference between fully inflate an air bag or to partially inflate an air bag as compared with deploying an air bag to a first or a second deployment volume. In the first case, the volume of the air bag is the same but the air bag is inflated with different gas pressures, for the latter case, the volumes of the air bag is different, and the gas pressure inside the air bag after inflation to the specified volume can be regulated to provide a safer air bag arrangement for an occupant. The air bag 10 is preferably ventilated by means of active ventilation.

## Claims

1. An air bag deployment arrangement for a vehicle (1), said air bag deployment arrangement comprises;
at least one air bag (10) having an air bag housing (4), said at least one air bag (10) is deployable to at least a first deployment volume (11) and a second deployment volume (12), said first deployment volume (11) being larger than said second deployment volume (12);
an inflator device (20) to inflate said at least one air bag (10),
at least one occupant positioning sensor arrangement (30), said at least one occupant positioning sensor arrangement (30) is arranged in working cooperation - with said inflator device (20);
at least one impact sensor (8, 9), said at least one impact sensor (35, 36, 37) is arranged in working cooperation with said at least one air bag (10) to deploy said at least one air bag (10) to said first or said second deployment volume (11, 12);
that said at least one air bag (10) comprises means for providing a predetermined gas pressure to said at least one air bag (10) as a function of said at least one impact sensor (8, 9) and/or said occupant positioning sensor arrangement (30), for said at least first and second deployment volumes (11, 12), said air bag arrangement further comprises at least one processing unit (40), said processing unit (40) is arranged in working cooperation with said at least one inflator device (20), at least one impact sensor (8, 9), at least one air bag (10) and at least one occupant positioning sensor arrangement (30),
**characterized in that**
said processing unit (40) is further arranged to determine a preferred inflation pressure and a preferred deployment volume dependent upon a detected impact scenario and the detected occupants position.

2. The arrangement according to claim 1, **characterized in that** said occupant positioning sensor arrangement (30) comprises a safety belt sensor (35), a seat positioning sensor (36) and a buckle sensor (37).

3. The arrangement according to claim 1 or 2, **characterized in that** said means for providing a predetermined gas pressure inside the at least one air bag (10) as a function of said at least one impact sensor (8, 9) comprises any of the following devices; an inflator device (20) operable between at least a first and a second inflation pressure, an active ventilation device arranged on said air bag (10) or an active ventilation device arranged on said air bag housing (4).

4. The arrangement according to claim 3, **characterized in that** said inflator device (20) comprises at least one inflator operable to said at least first and second inflation pressure.

5. The arrangement according to any of the preceding claims, **characterized in that** said inflator device (20) comprises at least a first and a second inflator, wherein said first inflator is operable to said first inflation pressure, and said second inflator is operable to said second inflation pressure.

6. A method for deploying an air bag arrangement for a vehicle (1) according to any preceding claims, said method comprises the steps of;
- detecting an impact scenario and determine the severity of said impact;
- determining appropriate inflation pressure for said air bag (10) as a function of said detected impact scenario;
- evaluating the position of the occupant;
- determining whether said air bag (10) is to be deployed to a first deployment volume (11) or a second deployment volume (12) dependent upon the outcome of said evaluation of the position of the occupant and;
- deploying said air bag (10) to said determined first or second deployment volume (11, 12) and to said determined inflation pressure.

7. The method according to claim 6, **characterized in that** said inflation pressure inside said air bag (10) is governed by means of an inflator device (20), and **in that** said inflator device (20) inflates said air bag (10) to said appropriate gas pressure.

8. The method according to claim 6 or 7, **characterized in that** said appropriate inflation pressure for said air bag (10) is evaluated again after an impact, to further adjust said inflation pressure.

9. The method according to claim 8, **characterized in that** said inflation pressure is adjusted by means of inflating an additional amount of gas into said air bag (10) or to adjust said volume of said air bag (10).

## Patentansprüche

1. Airbag-Entfaltungseinrichtung für ein Fahrzeug (1), wobei die Airbag-Entfaltungseinrichtung umfasst:
wenigstens einen Airbag (10), der ein Airbag-Gehäuse (4) aufweist, wobei der wenigstens eine Airbag (10) wenigstens auf ein erstes Entfaltungsvolumen (11) und ein zweites Entfaltungsvolumen (12) entfaltet werden kann, wobei das erste Entfaltungsvolumen (11) größer ist als das zweite Entfaltungsvolumen (12);
eine Airbag-Aufblasvorrichtung (20), um den wenigstens einen Airbag (10) aufzublasen,
wenigstens eine Insassenpositionierungssensoreinrichtung (30), wobei die wenigstens eine Insassenpositionierungssensoreinrichtung (30) dazu ausgelegt ist, mit der Airbag-Aufblasvorrichtung (20) zusammenzuwirken;
wenigstens einen Stoßsensor (8, 9), wobei der wenigstens eine Stoßsensor (35, 36, 37) dazu ausgelegt ist, mit dem wenigstens einen Airbag (10) zusammenzuwirken, um den wenigstens einen Airbag (10) auf das erste oder das zweite Entfaltungsvolumen (11, 12) zu entfalten;
wobei dieser wenigstens eine Airbag (10) Mittel umfasst, um den wenigstens einen Airbag (10) als eine Funktion des wenigstens einen Stoßsensors (8, 9) und/oder der Insassenpositionierungssensoreinrichtung (30) mit einem vorgegebenen Gasdruck für das erste und zweite Entfaltungsvolumen (11, 12) zu versorgen,
wobei die Airbag-Einrichtung ferner wenigstens eine Verarbeitungseinheit (40) umfasst, wobei die Verarbeitungseinheit (40) dazu ausgelegt ist, mit der wenigstens einen Aufblasvorrichtung (20), dem wenigstens einen Stoßsensor (8,9), dem wenigstens einen Airbag (10) und der wenigstens einen Insassenpositionierungssensoreinrichtung (30) zusammenzuwirken,
**dadurch gekennzeichet, dass**
die Verarbeitungseinheit (40) ferner dazu ausgelegt ist, einen bevorzugten Aufblasdruck und ein bevorzugtes Entfaltungsvolumen zu bestimmen, die von einem detektierten Stoßszenario und der detektierten Insassenposition abhängen.

2. Einrichtung nach Anspruch 1, **dadurch gekennzeichnet, dass** die Insassenpositionierungssensoreinrichtung (30) einen Sicherheitsgurtsensor (35), einen Sitzpositionssensor (36) und einen Gurtschlosssensor (37) umfasst.

3. Einrichtung nach Anspruch 1 oder 2, **dadurch gekennzeichnet, dass** die Mittel zum Versorgen mit einem vorgegebenen Gasdruck innerhalb des wenigstens einen Airbags (10) als eine Funktion des wenigstens einen Stoßsensors (8, 9) eine der folgenden Vorrichtungen umfassen: eine Aufblasvorrichtung (20), die wenigstens zwischen einem ersten und einem zweiten Aufblasdruck arbeiten kann, eine aktive Gaszufuhrvorrichtung, die auf dem Airbag (10) angeordnet ist, oder eine aktive Gaszufuhrvorrichtung, die auf dem Airbag-Gehäuse (4) angeordnet ist.

4. Einrichtung nach Anspruch 3, **dadurch gekennzeichnet, dass** die Aufblasvorrichtung (20) wenigstens einen Gasgenerator umfasst, der bis zu dem wenigstens ersten und zweiten Aufblasdruck arbeitet.

5. Einrichtung nach einem der vorhergehenden Ansprüche, **dadurch gekennzeichnet, dass** die Aufblasvorrichtung (20) wenigstens einen ersten und einen zweiten Gasgenerator umfasst, wobei der erste Gasgenerator bis zu dem ersten Aufblasdruck arbeitet und der zweite Gasgenerator bis zu dem zweiten Aufblasdruck arbeitet.

6. Verfahren zum Entfalten einer Airbag-Einrichtung in einem Fahrzeug (1) nach einem der vorhergehenden Ansprüche, wobei das Verfahren folgende Schritte umfasst:
- Detektieren eines Stoßszenarios und Bestimmen der Stärke des Stoßes;
- Bestimmen des entsprechenden Aufblasdrucks für den Airbag (10) als Funktion des detektierten Stoßszenarios;
- Bewerten der Position des Insassen;
- Bestimmen in Abhängigkeit vom Ergebnis der Bewertung der Position des Insassen, ob der Airbag (10) auf ein erstes Entfältungsvolumen (11) oder auf ein zweites Entfaltungsvolumen (12) entfaltet werden soll; und
- Entfalten des Airbags (10) auf das bestimmte erste oder zweite Entfaltungsvolumen (11, 12) und bis zum bestimmten Aufblasdruck.

7. Verfahren nach Anspruch 6, **dadurch gekennzeichnet, dass** der Aufblasdruck innerhalb des Airbags (10) mit Hilfe einer Aufblasvorrichtung (20) gesteuert wird und dass die Aufblasvorrichtung (20) den Airbag (10) bis zu dem entsprechenden Gasdruck aufbläst.

8. Verfahren nach Anspruch 6 oder 7, **dadurch gekennzeichnet, dass** der entsprechende Gasdruck für den Airbag (10) nach einem Stoß erneut bewertet wird, um den Aufblasdruck weiter anzupassen.

9. Verfahren nach Anspruch 8, **dadurch gekennzeichnet, dass** der Aufblasdruck dadurch angepasst wird, dass eine zusätzliche Gasmenge in den Airbag (10) geblasen wird oder dass das Volumen des Airbags (10) angepasst wird.

## Revendications

1. Ensemble pour le déploiement d'un coussin gonflable de sécurité pour un véhicule (1), ledit ensemble pour le déploiement d'un coussin gonflable de sécurité comprenant :
au moins un coussin gonflable de sécurité (10) ayant un logement (4) de coussin gonflable, ledit au moins un coussin gonflable de sécurité (10) étant déployable selon au moins un premier volume de déploiement (11) et un deuxième volume de déploiement (12), ledit premier volume de déploiement (11) étant supérieur audit deuxième volume de déploiement (12) ;
un dispositif (20) générateur de gaz destiné à gonfler ledit au moins un coussin gonflable de sécurité (10) ;
au moins une unité (30) de capteur de positionnement d'un occupant, ladite au moins une unité (30) de capteur de positionnement d'un occupant étant prévue pour une coopération de fonctionnement avec ledit dispositif (20) générateur de gaz ;
au moins un détecteur de choc (8, 9), ledit au moins un détecteur de choc (35, 36, 37) étant prévu pour une coopération de fonctionnement avec ledit au moins un coussin gonflable de sécurité (10) pour le déploiement dudit au moins un coussin gonflable de sécurité (10) selon ledit premier ou ledit deuxième volumes de déploiement (11, 12) ;
ledit au moins un coussin gonflable de sécurité (10) comprenant des moyens pour fournir une pression de gaz prédéterminée audit au moins un coussin gonflable de sécurité (10) en fonction dudit au moins un détecteur d'impact (8, 9) et/ou de ladite unité (30) de capteur de positionnement d'un occupant, pour lesdits au moins un premier et un deuxième volumes de déploiement (11, 12),
ledit ensemble pour coussin gonflable de sécurité comprenant en outre au moins une unité de traitement (40), ladite unité de traitement (40) étant prévue en coopération de fonctionnement avec lesdits au moins un dispositif (20) générateur de gaz, au moins un détecteur de choc (8, 9), au moins un coussin gonflable de sécurité (10) et au moins une unité (30) de capteur de positionnement d'un occupant,
***caractérisé en ce que***
ladite unité de traitement (40) est en outre organisée pour déterminer une pression de gonflage préférée et un volume de déploiement préféré dépendants d'un scenario de choc détecté et de la position détectée de l'occupant.

2. Ensemble selon la revendication 1, ***caractérisé en ce que*** ladite unité (30) de capteur de positionnement d'un occupant comprend un capteur (35) de ceinture de sécurité, un capteur (36) de positionnement du siège et un capteur (37) de boucle.

3. Ensemble selon la revendication 1 ou 2, ***caractérisé en ce que*** lesdits moyens pour fournir une pression de gaz prédéterminée à l'intérieur dudit au moins un coussin gonflable de sécurité (10) en fonction dudit au moins un détecteur de choc (8, 9) comprend l'un quelconque des dispositifs suivants : dispositif (20) générateur de gaz actionnable entre au moins une première et une deuxième pressions de gonflage, un dispositif de ventilation active monté sur ledit coussin gonflable de sécurité (10) ou un dispositif de ventilation actif monté sur ledit logement (4) du coussin gonflable.

4. Ensemble selon la revendication 3, ***caractérisé en ce que*** ledit dispositif (20) générateur de gaz comprend au moins un générateur actionnable auxdites au moins une première et une deuxième pressions de gonflage.

5. Ensemble selon l'une quelconque des revendications précédentes, ***caractérisé en ce que*** ledit dispositif (20) générateur de gaz comprend au moins un premier et un deuxième générateurs, ledit premier générateur de gaz étant actionnable à ladite première pression de gonflage et ledit deuxième générateur de gaz étant actionnable à ladite deuxième pression de gonflage.

6. Procédé pour le déploiement d'un ensemble de coussin gonflable de sécurité pour un véhicule (1) selon l'une quelconque des revendications précédentes, ledit procédé comprenant les étapes de :
- détection d'un scenario de choc et détermination de la sévérité dudit choc ;
- détermination d'une pression de gonflage appropriée pour ledit coussin gonflable de sécurité (10) en fonction dudit scenario de choc détecté ;
- évaluation de la position de l'occupant ;
- détermination de si ledit coussin gonflable de sécurité (10) doit être déployé selon un premier volume (11) de déploiement ou selon un deuxième volume (12) de déploiement en fonction du résultat de ladite évaluation de la position de l'occupant ; et
- déploiement dudit coussin gonflable de sécurité (10) selon ledit premier ou deuxième volume de déploiement déterminé (11, 12) et selon ladite pression de gonflage déterminée.

7. Procédé selon la revendication 6, ***caractérisé en ce que*** ladite pression de gonflage à l'intérieur dudit coussin gonflable de sécurité (10) est régie au moyen d'un dispositif (20) générateur de gaz, et ***en ce que*** ledit dispositif (20) générateur de gaz gonfle ledit coussin gonflable (10) à ladite pression de gaz appropriée.

8. Procédé selon la revendication 6 ou 7, ***caractérisé en ce que*** ladite pression de gonflage appropriée pour ledit coussin gonflable de sécurité (10) est à nouveau évaluée après un choc, pour régler à nouveau ladite pression de gonflage.

9. Procédé selon la revendication 8, ***caractérisé en ce que*** ladite pression de gonflage est réglée par gonflage d'une quantité supplémentaire de gaz dans ledit coussin gonflable de sécurité (10) ou par réglage dudit volume dudit coussin gonflable de sécurité (10).
